**Europäisches Patentamt**

**European Patent Office**

**Office européen des brevets**

(19)

(11) Veröffentlichungsnummer: **0 230 890**

**B1**

(12)

# EUROPÄISCHE PATENTSCHRIFT

(45) Veröffentlichungstag der Patentschrift: **17.10.90**

(21) Anmeldenummer: **87100256.4**

(22) Anmeldetag: **12.01.87**

(51) Int. Cl.⁵: **B 65 D 51/16,** B 60 K 15/04, F 02 M 37/00

(54) **Blendenring.**

(30) Priorität: **30.01.86 DE 3602844**

(43) Veröffentlichungstag der Anmeldung:
**05.08.87 Patentblatt 87/32**

(45) Bekanntmachung des Hinweises auf die Patenterteilung:
**17.10.90 Patentblatt 90/42**

(84) Benannte Vertragsstaaten:
**DE ES FR GB IT SE**

(56) Entgegenhaltungen:
**DE-A-2 336 214**
**DE-A-2 430 253**
**DE-A-3 406 788**
**DE-B-2 440 986**
**US-A-3 730 216**

(73) Patentinhaber: **Temtec Fahrzeugtechnik Entwicklungsgesellschaft mbH**
**Kranzhornweg 5**
**D-8201 Raubling (DE)**

(72) Erfinder: **Angelika, Barbara Maria Temmesfeld, geb. Bauer**
**Kranzhornweg 5**
**D-8201 Raubling (DE)**

(74) Vertreter: **Kehl, Günther, Dipl.-Phys. et al**
**Patentanwälte Hagemann & Kehl Ismaninger Strasse 108 Postfach 86 03 29**
**D-8000 München 86 (DE)**

EP 0 230 890 B1

## Beschreibung

Die Erfindung bezieht sich auf einen Blendenring zur Befestigung an einem selbstschließenden Kraftstoffbehälterverschluß.

Ein selbstschließender Kraftstoffbehälterverschluß ist beispielsweise aus der DE—OS 34 06 788 bekannt.

Es ist angestrebt, Kraftstoffbehälterverschlüsse, insbesondere selbstschließende Kraftstoffbehälterverschlüsse, so zu dimensionieren, daß eine Zapfpistole nahezu formschlüssig in die Öffnung des Kraftstoffbehälterverschlusses einführbar ist. Eine solche Bauweise ermöglicht eine präzise Führung der Zapfpistole. Es wird somit vermieden, daß die Zapfpistole in ungünstiger Lage in den Kraftstoffbehältereinfüllstutzen eingeführt wird, wodurch häufig lästigerweise die automatische Absperrvorrichtung der Zapfpistole ausgelöst wird. Eine möglichst formschlüssige Anpassung des Kraftstoffbehälterverschlusses an die Zapfpistole ist auch dann angestrebt, wenn das Kraftfahrzeug nur mit bleifreiem Benzin betankt werden darf. Eine Verengung der Einfüllöffnung des Kraftsstoffbehälterverschlusses auf das Durchmessermaß der Zapfpistole verhindert, daß eine Zapfpistole für bleihaltiges Benzin, die üblicherweise einen größeren Durchmesser aufweist, in den selbstschließenden Kraftstoffbehälterverschluß eingeführt werden kann.

Anderseits wird jedoch durch den nahezu dichten Sitz der Zapfpistole in der Einfüllöffnung des selbstschließenden Kraftstoffbehälterverschlusses das Abströmen der durch das Einfüllen des Kraftstoffes verdrängten Dämpfe aus dem Tank des Kraftfahrzeuges erschwert. Diese müssen durch den verbleibenden schmalen Ringspalt zwischen Einfüllöffnung und Zapfpistole ins Freie treten. Wegen des verengten Strömungsquerschnittes erreichen sie eine hohe Strömungsgeschwindigkeit und blasen der Person ins Gesicht, die mit dem Einfüllen des Kraftstoffes beschäftig ist. Dieses ist gefährlich und jedenfalls unangenehm.

Der Erfindung lieft die Aufgabe zugrunde, einen selbstschließenden Kraftstoffbehälterverschluß derart weiterzubilden, daß auch bei nahezu dicht eingeführter Zapfpistole die aus dem Tank, verdrängten Kraftstoffdämpfe sicher und bequem abgeleitet werden können.

Diese Aufgabe ist dadurch gelöst, daß an dem Krafstoffbehälterverschluß ein Blendenring befestigt ist, der ein an den Kraftstoffbehälterverschluß unter Freilassung eines Luftspaltes anschließendes Führungsrohrteil aufweist, das an seiner dem Kraftstoffbehälterverschluß abgewandten Seite in einen umgestülpten Randbereich übergeht.

Durch den Blendenring gemäß der Erfindung, insbesondere durch dessen Führungsrohrteil wird eine sichere Führung der Zapfpistole gewährleistet. Das Führungsrohrteil kann an die Form der Zapfpistole so angepßt sein, daß nur wenige Millimeter Spiel zwischen dem Führungsrohrteil und der eingeführten Zapfpistole bestehen, so daß die Zapfpistole eine definierte Lage einnimmt, die ein störungsfreies Betanken, d.h. eine Betanken ohne zurückspritzenden Kraftstoff und ohne Auslösung des automatischen Abschaltventils, ermöglicht ist. Die infolge des Betankungsvorganges aus dem Kraftstoffbehälter verdrängten Dämpfe können über den Luftspalt ohne daß sich im Innern des Tankes ein allzu großer Überdruck aufbaut, abströmen. Sie werden im Innern des umgestülpten Randbereichs umgelenkt und gleichmäßig nach außen über den vollen Umfang des Blendenringes verteilt, so daß die den Kraftstoffbehälter füllende Person nicht durch die Dämpfe belästigt oder gefährdet wird.

Nach einer besonders vorteilhaften Weiterbildung der Erfindung umschließt der umgestülpte Randbereich die Mündung des Kraftstoffbehälterstutzens unter Freilassung eines Luftspaltes. Bei einem derartig weit umgestülpten Randbereich werden die aus dem Behälter austretenden Kraftstoffdämpfe in ihrer Strömungsrichtung nahezu um 180° umgelenkt und strömen so von der den Kraftstoffbehälter füllenden Person weg. Durch die Umschließung des Randbereichs der Mündung ist der (selbstschließende) Kraftstoffbehälterverschluß vor Manipulationen, insbesondere gegen Diebstahlt geschützt.

Durch an der Innenwand des umgestülpten Randbereichs angebrachte Längsstege wird eine besonders gute Formhaltigkeit des Blendenrings erzielt.

In dem Führungsrohr kann nach einer weiteren vorteilhaften Ausführungsform ein die freie Öffnung des Führungsrohres begrenzender Vorsprung angeordnet sein. Ein solcher Vorsprung ist insbesondere dazu geeignet, die Einführung von bestimmten Zapfpistolen zu verhindern.

Nach einer vorteilhaften Weiterbildung der Erfindung ist in dem Führungsrohr an seinem dem Kraftstoffbehälterverschluß abgewandten Ende ein wulstförmiger Steg angeordnet. Dieser wulstförmiger Steg kann sich mit einem entsprechenden Vorsprung oder einer Schulter an der Außenwand der Zapfpistole verhaken, so daß die Zapfpistole sich gehalten und ein Herausrutschen aus dem Einfüllstutzen vermieden wird.

Gemäß einer weiteren besonders vorteilhaften Ausführungsform der Erfindung ist der Blendenring mit Einrastmitteln versehen, mit denen er auf dem Kraftstoffbehälterverschluß einrastbar ist. Dies ist in fertigungstechnischer Hinsicht besonders vorteilhaft, da durch die Wahl eines entsprechenden Blendenrings derselbe Kraftstoffbehälterverschluß an verschiedene Zapfpistolenformen angepaßt werden kann. Auch können Blendenringe mit zur Längsachse des Einfüllstutzens geneigten Führungsrohren vorgesehen sein, die vorzugsweise bei geneigten Kraftstoffeinfüllstutzen je nach Kraftfahrzeugtyp zum Einsatz kommen. Durch die Wahl des einrastbaren Blendenrings kann somit der Kraftstoffbehälterverschluß in fertigungstechnisch einfacher Weise an den konkreten Bedarfsfall angepaßt werden.

Wenn nach einer weiteren vorteilhaften Ausführungsform der Erfindung die Einrastmittel im Innern des umstülpten Randbereichs so angeordnet sind, daß sie bei auf dem Kraftstoffbehälterverschluß eingerastetem Blendenring unzugänglich sind, ist der Blendenring ebenso wie der Kraftstoffbehälterverschluß gegen Diebstahl gesichert. Nach einer weiteren vorteilhaften Ausführungsform bestehen die Einrastmittel aus zwei um 180° versetzt angeordneten, jeweils eine Einkerung aufweisenden Vorsprüngen, in die ein in radialer Richtung vorstehender Rand des Kraftstoffbehälterverschlusses einrastbar ist. Wird der Blendenring bei dieser Ausführungsform auf den Kraftstoffbehälterverschluß aufgedrückt, so wird der durch die auf dem radialen Rand auflaufenden Vorsprünge oval deformiert und der Rand rastet in die Einkerbungen ein, wobei der Blendenring wieder seine ursprünglich runde Form annimmt.

Durch mehrere an der Innenwand des umgestülpten Randbereichs angebrachte Axialanschläge kann nach einer weiteren vorteilhaften Ausführungsform eine genau definierte Position des Blendenrings erreicht werden.

Griffeinkerbungen an der Außenwand des umgestülpten Randbereichs erleichtern nach einer weiteren vorteilhaften Ausführungsform die Montage des Kraftstoffbehälterverschlusses zusammen mit dem aufgesetzten Blendenring in einem Einfüllstutzen eines Kraftfahrzeuges.

Die Erfindung wird nachfolgend anhand der in den Figuren schematisch dargestellten Ausführungsbeispiel näher erläutert. Es zeigt:

Figur 1: einen Blendenring gemäß der Erfindung, aufgesetzt auf einen selbstschließenden Kraftstoffbehälterverschluß im Längsschnitt;

Figur 2: einen Blendenring mit Kraftstoffbehälterverschluß, montiert im Kraftstoffeinfüllstutzen eines Fahrzeuges. Der Blendenring ist an die Form der üblicherweise für bleifreies Benzin verwendeten Zapfpistolen angepaßt.

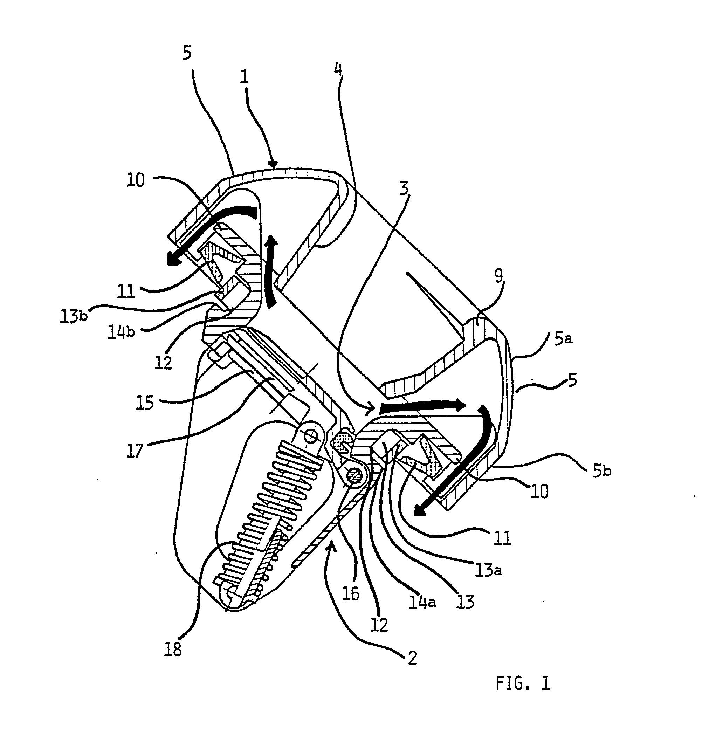

In Figur 1 ist ein Blendenring I im Axialschnitt zu erkennen. Er weist ein etwa zylinderförmiges Führungsrohr 4 auf, das in einen unter Freilassung eines Ringraumes umgestülpten Randbereich 5 übergeht. Der Randbereich weist in dem an das Führungsrohr anschließenden Teil eine etwa unter 45° zur Längsachse des Führungsrohres 4 verlaufende Schräge 5a auf und geht danach in einen zylindrischen Teil 5b über, der näherungsweise koaxial zu dem Führungsrohr 4 ist. Über einen Zentrumswinkel von 180° weist das Führungsrohr an seinem von dem Einfüllstutzen des Kraftfahrzeuges abweisenden Ende einen Wulst 9 auf, der sich zu seinen Enden hin abflacht. Der Wulst 9 greift hinter einen entsprechenden Vorsprung an der Zapfpistole und sichert diese gegen Herausrutschen. In dem zylindrischen Teil 5b des umgestülpten Randbereichs 5 befinden sich an der Innenseite Längsstege, also Stege, die parallel zur Längsachse des Führungsrohres 4 verlaufen. Diese Stege sind jedoch bei der in Figur 1 gewählten Schnittdarstellung nicht erkennbar. Durch das Anbringen dieser Stege kann selbst bei Wahl einer geringen Wandstärke eine ausreichende Eigensteifigkeit des Blendenringes I erzielt werden. Zwei sich gegenüberliegende Stege sind mit einer Anlauframpe und einer Einkerbung versehen, in die ein radial vorstehender Rand 10 eines Kraftstoffbehälterverschlusses 2 einrastbar ist. Die Axialposition der Einkerbung ist dabei so gewählt, daß in dem eingerasteten Zustand zwischen dem Ende des Führungsrohres 4 und dem Kraftstoffbehälterverschluß 2 ein ringförmiger Luftspalt 3 verbleibt.

Der radial vorstehende Rand 10 des Kraftstoffbehälterverschlusses 2 liegt auf dem Mündungsrand 6 eines Kraftstoffeinstützens auf. Unterhalb des Randes 10 ist eine Dichtung 11 angeordnet. Am Grund einer umlaufenden Nut 12 am Halse des Kraftstoffbehälterverschlusses ist ein Sperrzahnung angeordnet, auf der sich eine Federzunge (nicht dargestellt) eines Sperringes 13 nach Art eines Richtgesperres abstützt. Der Sperring 13 weist zwei sich gegenüberliegende Vorsprünge 13a und 13b auf. Unter halb des Sperringes 13, d.h. weiter in Richtung auf dem Kraftstofftank zu, weist der Krafstoffeinfüllstutzen zwei sich gegenüberliegende Vorsprünge 14a, b auf.

Der Kraftstoffbehälterverschluß wird durch ein Klappe 15 verschlossen, die seitlich in einem Gelenk 16 verschwenkbar gelagert ist. Die Klappe liegt mit einer Dichtung 17 an einem konisch ausgebildeten Teil des Halses des Kraftstoffbehälterverschlusses an. Sie ist durch eine Feder 18 in Richtung auf ihre Schließposition vorgespannt.

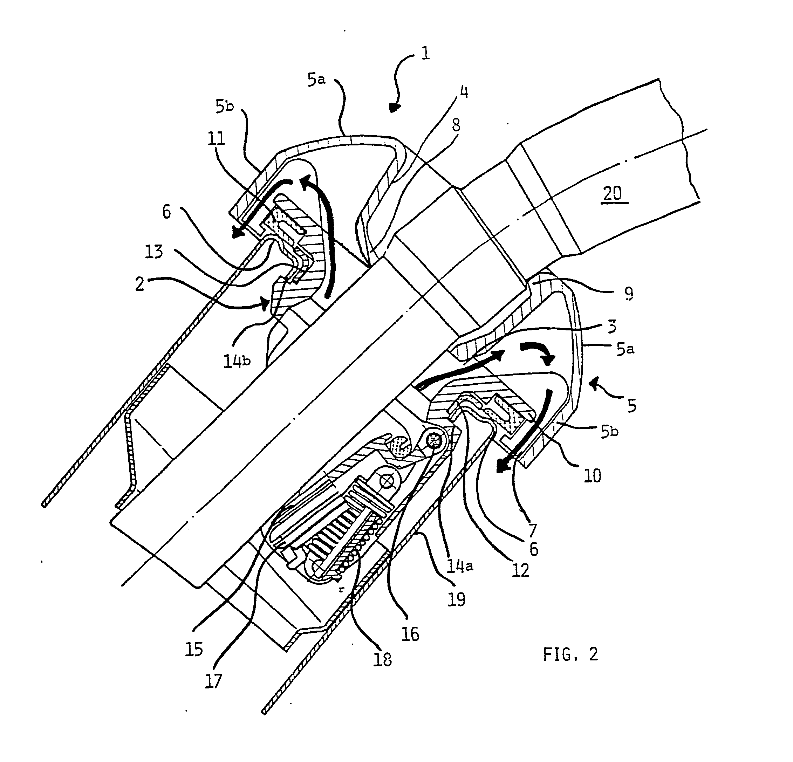

In Figur 2 ist eine weitere Ausführungsform eines Blendenrings gezeigt. Der Blendenring der Figur 2 unterscheidet sich vom Blendenring der Figur 1 dadurch, daß er einen Vorsprung 8 aufweist, durch den die freie Öffnung des Fuhrungsrohres 4 begrenzt ist, so daß nur Zapfpistolen mit bestimmter Form (solche für bleifreies Benzin) eingeführt werden können.

In Figur 2 ist die aus Kraftstoffbehälterverschluß 2 und aufgesetztem Blendenring 1 bestehende Anordnung auf dem Kraftstoffeinfüllstutzen 19 eines Kraftfahrzeuges aufgesetzt. Der Kraftstoffeinfüllstutzen 19 des Kraftfahrzeuges weist an seinem freien Ende einen nach innen umgestülpten Randbereich auf, der an zwei gegenüberliegenden Stellen (nicht darstellt) durchbrochen ist (Innenbajonett oder Innen-Renk-Verschluß). Durch diesen Randbereich sind die beiden Vorsprünge 14a, b des Krafstoffbehälterverschlusses 2 sowie entsprechende Vorsprünge 13a, b des Sperrings 13 eingeführt. Durch eine Rechtsdrehung an dem Blendenring 1, der vorzugsweise an seinem umgestülpten Randbereich 5 erfaßt wird, laufen die Vorsprünge 14a, b an den nach innen weisenden Kanten des umgestülpten Randbereiches des Kraftsstoffeinfüllstutzens auf, wobei der Rand 10 in Richtung auf den Mündungsrand des Kraftstoffeinfüllstutzens unter Deformierung der elastischen Dichtung 11 gepreßt wird, ebenso wie dies beim Aufsetzen eines Tankdeckels auf einen Kraftstoffeinfüllstutzen geschieht. Die Vorsprünge 13a, b des Sperrings 13 werden bei dieser Drehbewegung in den Ausnehmungen des Randbereiches gehalten, so daß der Sperring die Drehbewegung nicht mitmacht und der Kraftstoffbehälterverschluß infolge der Richtgesperrewirkung des Sperrings unlösbar auf dem Kraftstoffeinfüllstutzen befestigt wird.

Durch das Einführen eines Zapfpistole 20 wird die Klappe 15 gegen die Wirkung der Feder 18 aus ihrer geschlossenen Stellung gedrückt. Wie in Figur 2 zur erkennen ist, sitzt die Zapfpistole 20 nahezu dicht in dem Führungsrohr 4, so daß eine sichere Positionierung der Zapfpistole 20 gewährleistet ist. Die bei der Befüllung des Kraftstofftankes entweichenden Dämpfe können entlang der fett eingezeichneten Pfeile ins Freie austreten.

## Patentansprüche

1. Blendenring zur Befestigung an einem selbstschließenden Kraftstoffbehälterverschluß (2), dadurch gekennzeichnet, daß er ein an den Kraftstoffbehälterverschluß (2) unter Freilassung eines Luftspaltes (3) anschließendes Führungsrohrteil (4) aufweist, das an seiner dem Kraftstoffbehälterverschluß (2) abgewandten Seite in einen umgestülpten Randbereich (5) übergeht.

2. Blendenring nach Anspruch 1, dadurch gekennzeichnet, daß der umgestülpte Randbereich (5) die Mündung des Kraftstoffbehälterstutzens (6) unter Freilassung eines Luftspaltes (7) umschließt.

3. Blendenring nach Anspruch 2, dadurch gekennzeichnet, daß an der Innenwand des umgestülpten Randbereichs (5) Längsstege angeordnet sind.

4. Blendenring nach einem der Ansprüche 1 bis 3, dadurch gekennzeichnet, daß in dem Führungsrohr (4) ein die freie Öffnung des Führungsrohrs (4) begrenzender Vorsprung (8) angeordnet ist.

5. Blendenring nach einem der Ansprüche 1 bis 4, dadurch gekennzeichnet, daß in dem Führungsrohr (4) an seinem dem Kraftstoffbehälterverschluß abgewandten Ende ein wulstförmiger Steg (9) angeordnet ist.

6. Blendenring nach einem der Ansprüche 1 bis 5, dadurch gekennzeichnet, daß er Einrastmittel aufweist, mit denen er auf dem Kraftstoffbehälterverschluß (2) einrastbar ist.

7. Blendenring nach Anspruch 6, dadurch gekennzeichnet, daß die Einrastmittel im Innern des umgestülpten Randbereichs (5) so angeordnet sind, daß sie bei auf dem Kraftstoffbehälterschluß (2) eingerastetem Blendenring (1) unzugänglich sind.

8. Blendenring nach Anspruch 6 oder 7, dadurch gekennzeichnet, daß er an der Innenwand des umgestülpten Randbereichs mindestens zwei um 180 versetzt angeordnete, jeweils eine Einkerbung aufweisende Vorsprünge aufweist, in die ein in radialer Richtung vorstehender Rand (10) des Kraftstoffbehälterverschlusses (2) einrastbar ist.

9. Blendenring nach einem der Ansprüche 6 bis 8, dadurch gekennzeichnet, daß er an der Innenwand des umgestülpten Randbereichs (5) mehrere Axialanschläge aufweist.

10. Blendenring nach einem der Ansprüche 1 bis 9, dadurch gekennzeichnet, daß er an der Außenwand des umstülpten Randbereichs (5) Griffeinkerbungen aufweist.

## Revendications

1. Bague d'obturation destinée à la fixation sur un bouchon de réservoir de carburant à fermeture automatique (2), caractérisée en ce qu'elle comporte une partie tubulaire de guidage (4) se raccordant au bouchon de réservoir de carburant (2) en laissant libre un espace d'air (3), qui se transforme sur son côté opposé au bouchon de réservoir de carburant (2) en une zone de bordure retournée (5).

2. Bague d'obturation selon la revendication 1, caractérisée en ce que la zone de bordure retournée (5) entoure l'embouchure de l'ajutage du réservoir de carburant (6) en laissant libre un espace d'air (7).

3. Bague d'obturation selon la revendication 2, caractérisée en ce que sur la paroi intérieure de la zone de bordure retournée (5) sont disposées des nervures longitudinales.

4. Bague d'obturation selon une des revendications 1 à 3, caractérisée en ce que dans le tube de guidage (4) est placé une saillie (8) limitant l'ouverture libre du tube de guidage (4).

5. Bague d'obturation selon l'une des revendications 1 à 4, caractérisée en ce que dans le tube de guidage (4) est placée à son extrémité opposée au bouchon de réservoir de carburant, une nervure (9) en forme de bourrelet.

6. Bague d'obturation selon l'une des revendications 1 à 5, caractérisée en ce qu'elle comporte des moyens d'encliquetage avec lesquels elle peut s'engager sur le bouchon de réservoir de carburant (2).

7. Bague d'obturation selon la revendication 6, caractérisée en ce que les moyens d'encliquetage sont disposés à l'intérieur de la zone de bordure retournée (5) de telle sorte qu'ils ne sont pas accessibles lorsque la bague d'obturation est encliquétée sur le bouchon de réservoir de carburant (2).

8. Bague d'obturation selon la revendication 6 ou 7, caractérisée en ce qu'elle comporte sur la paroi intérieure de la zone de bordure retournée au moins deux saillies disposées de façon décalée à 180°, comportant chacune une entaille dans laquelle peut s'acchrocher une bordure (10) dépassant du bouchon de réservoir de carburant (2) en direction radiale.

9. Bague d'obturation selon l'une des revendications 6 à 8, caractérisée en ce que, sur la paroi intérieure de la zone de bordure retournée (5), elle comporte plusieurs butées axiales.

10. Bague d'obturation selon l'une des revendications 1 à 9, carctérisée en ce qu'elle comporte, sur la paroi extérieure de la zone de bordure retournée (5), des entailles d'accrochage.

## Claims

1. A cover ring for securing to a self-closing fuel tank seal (2) characterized in that it features a guide tube section (4) on the self-closing fuel tank seal (2) and maintaining an air gap (3), said guide tube (4) merging in a lip-shaped edge section (5) on the side facing away from said fuel tank seal (2).

2. A cover ring according to Claim 1, wherein said lip-shaped edge section (5) surrounds the mouth of the fuel tank connector (6) whilst maintaining an air gap (7).

3. A cover ring according to Claim 2, wherein the interior wall of said lip-shaped edge section (5) features longitudinal ridges.

4. A cover ring according to Claims 1 thru 3, wherein a projection (8) is provided in said guide tube (4) to limit the clear opening of the guide tube (4).

5. A cover ring according to any of the Claims 1 thru 4, wherein a knuckle (9) is provided in said guide tube (4) at its end facing away from the fuel tank seal (2).

6. A cover ring according to any of the Claims 1 thru 5, wherein it features locking means for locking to said fuel tank seal (2).

7. A cover ring according to Claim 6, wherein said locking means are arranged within said lip-shaped edge section (5) to be inaccessible when said filler ring (1) is locked to said fuel tank seal (2).

8. A cover ring according to Claim 6 or 7, wherein it features at least two projections displaced by 180 deg. on the interior wall of said lip-shaped edge section and each having a notch for the purpose of locking the protruding edge (10) of said fuel tank seal (2) in radial direction.

9. A cover ring according to any of the Claims 6 thru 8, wherein it features a plurality of axial stops on the interior wall of said lip-shaped edge section (5).

10. A cover ring according to any of the Claims 1 thru 9, wherein it features finger grip notches on the exterior wall of said lip-shaped edge section (5).

FIG. 1

FIG. 2